# EUROPÄISCHE PATENTSCHRIFT

(11) **EP 0 857 751 B1**
(45) Veröffentlichungstag und Bekanntmachung des Hinweises auf die Patenterteilung: **28.08.2002**
(21) Anmeldenummer: 98101609.0
(22) Anmeldetag: 30.01.1998
(51) Int. Cl.: C08K 5/40, C08K 3/36, C08K 5/47, C08L 21/00

(54) **Kautschukmischung für Reifenlaufstreifen**
Rubber composition for yre tread
Composition de caoutchouc pour bande de roulement pour pneumatiques

(30) Priorität: 06.02.1997 DE 19704464
(43) Veröffentlichungstag der Anmeldung: 12.08.1998
(73) Patentinhaber: Continental Aktiengesellschaft, 30165 Hannover (DE)
(72) Erfinder: Well, Michael, Dr., 38159 Vechelde (DE)

(56) Entgegenhaltungen:
- EP-A- 0 751 178
- WO-A-95/34601
- SUBHAS CHANDRA DEBNATH ET AL: "STUDIES ON THE EFFECT OF THIURAM DISULFIDE ON NR VULCANIZATION ACCELERATED BY THIAZOLE-BASED ACCELERATOR SYSTEMS" JOURNAL OF APPLIED POLYMER SCIENCE, Bd. 60, Nr. 6, 9.Mai 1996, Seiten 845-855, XP000584647

## Beschreibung

Die Erfindung betrifft eine mit Schwefel vemetzbare Kautschukmischung insbesondere für Reifenlaufstreifen.

Da die Fahreigenschaften eines Reifens in einem großen Umfang von der Kautschukzusammensetzung des Laufstreifens abhängig sind, werden besonders hohe Anforderungen an die Zusammensetzung der Laufstreifenmischung gestellt. So konnte z. B. festgestellt werden, daß durch Variation der Füllstoffe die Eigenschaften des Reifens wie z.B. Abrieb, Rollwiderstand und Naßrutschverhalten beeinflußt werden. Die Wirkung dieser Füllstoffe ist aber wiederum davon abhängig, welche anderen Komponenten (weitere Zusatzstoffe wie z. B. Beschleuniger, Weichmacher, Alterungsschutzmittel) in die Kautschukmischung für Laufstreifen eingemischt werden. So sind beispielsweise Laufstreifenmischungen bekannt, die als aktiven Füllstoff hauptsächlich Kieselsäure enthalten. Diese kieselsäurehaltigen Laufstreifenmischungen verleihen dem Reifen einen geringen Rollwiderstand und ein gutes Naßrutschverhalten. Die Kautschukkomponenten dieser kieselsäurehaltigen Mischungen werden mittels Schwefel und einem geeigneten Vernetzungssystem, d. h. unter zur Hilfenahme der Vulkanisationsbeschleuniger Benzothiazyl-2-cyclohexylsulfenamid (CBS) und Diphenylguanidin (DPG) vulkanisiert. Es wurde aber festgestellt, daß solche Kautschukmischungen dem vulkanisierten Laufstreifen eine niedrige Zugfestigkeit und Bruchdehnung verleihen, so daß diese Reifen nur eine begrenzte Haltbarkeit aufweisen.

Die Aufgabe der vorliegenden Erfindung besteht darin, daß Kautschukmischungen insbesondere für Reifenlaufstreifen bereitgestellt werden, die eine höhere Zugfestigkeit und Bruchdehnung besitzen, so daß die Lebensdauer des vulkanisierten Reifens erhöht werden kann.

Gelöst wird diese Aufgabe erfindungsgemäß dadurch, daß die Kautschukmischung bezogen auf 100 Gewichtsteile der Gesamtkautschukmasse
a) 40 bis 100 pphr eines in Lösung polymerisierten Styren-Butadien-Copolymers (S-SBR),
b) 0 bis 50 pphr Naturkautschuk (NR) und/oder synthetisches Polyisopren (IR),
c) 0 bis 45 pphr Polybutadien (BR),
d) 50 - 80 pphr Kieselsäure,
e) 0 bis 20 pphr Ruß,
f) 3 bis 7 pphr Silanierungsmittel,
g) 0,1 bis 0,5 pphr Tetrabenzylthiuramdisulfid (TBzTD) und
h) 1 bis 3 pphr Benzothiazyl-2-cyclohexylsulfenamid (CBS) sowie
i) weitere übliche Zusatzstoffe enthält.

Die erfindungsgemäßen Kautschukmischungen verleihen dem Vulkanisat eine hervorragende Zugfestigkeit und Bruchdehnung und somit auch eine hohe Bruchenergie. Diese erfindungsgemäße Kombination eröffnet die Möglichkeit, die mechanische Beanspruchbarkeit von insbesondere Reifenlaufstreifen zu erhöhen bei gleichbleibend geringem Rollwiderstand und gutem Naßrutschverhalten. Des weiteren hat sich überraschenderweise herausgestellt, daß während der Vulkanisation dieser Kautschukmischung ein optimales Fließ-/Heizzeitverhältnis herrscht. Diese Charakteristika während der Vulkanisation sind von verfahrenstechnischer Bedeutung. So konnte die Anvulkanisationszeit der Mischung verlängert werden, die eine Erhöhung der Verarbeitungssicherheit mit sich bringt. Zugleich konnte die Gesamtvulkanisationszeit aber verkürzt werden, so daß eine Energie- und Zeitersparnis bei der Herstellung des Vulkanisats erzielt werden konnte. Darüber hinaus wird durch die Verkürzung der Vulkanisationszeit der Kautschukmischung des Reifenlaufstreifens auch verhindert, daß andere Bauteile, für deren Vulkanisation weniger Zeit benötigt wird, nicht überheizt werden. Damit wird die mechanische Stabilität des gesamten Reifens positiv beeinflußt.

Das in der erfindungsgemäßen Kautschukmischung zum Einsatz kommende Styren-Butadien-Copolymerisat ist ein in Lösung hergestelltes Polymer. Die Herstellung dieses Styren-Butadien-Types erfolgt unter Verwendung von z. B. Lithiumalkylen. Der Styrenanteil dieser Polymere beträgt ca. 15 bis 35 mol%. Der cis 1,4-Anteil des Polybutadiens soll einen Wert von 90 bis 99 mol% und der 1,2-Anteil bis 5 mol% verzeichnen. Vorzugsweise beträgt der S-SBR-Anteil in der Mischung 45 bis 75 pphr, damit der vulkanisierte Reifen optimale Eigenschaften hinsichtlich z. B. Rollwiderstand und Naßgriff erhält. Des weiteren sind in der Kautschukmischung 0 bis 45 pphr vorzugsweise 20 bis 40 pphr Polybutadien enthalten. Der cis 1,4-Anteil des Polybudatiens soll > 90 mol% betragen. Solch hohe cis-Anteile werden z. B. durch Lösungspolymerisation in Anwesenheit von Katalysatoren vom Typ der seltenen Erden erreicht. Darüber hinaus enthält die erfindungsgemäße Kautschukmischung 0 bis 50 pphr Naturkautschuk und/oder synthetisches Polyisopren, wobei der cis 1,4-Anteil > 90 mol% aufweisen soll. Solch ein synthetisches Polyisopren kann durch steriospezifische Polymerisation in Lösung mit Ziegler-Natta-Katalysatoren oder unter Verwendung von fein verteilten Lithiumalkylen erhalten werden. Vorzugsweise soll für die erfindungsgemäße Kautschukmischung Naturkautschuk Verwendung finden. Der cis 1,4-Polyisopren-Anteil im Naturkautschuk beträgt > 99 mol%.

Die in der erfindungsgemäßen Kautschukmischung zur Anwendung kommende Kieselsäure ist aus dem Stand der Technik bekannt. So sollen Kieselsäuren mit einer BET-Oberfläche von 145 bis 270 m²/g (ASTM D 5604) einer CTAB-Zahl von 120 bis 285 m²/g (ASTM D 3765) und einem Porenvolumen von 0,7 bis 1,7 ml/g (DIN 66133) Verwendung finden. Als Kieselsäure kann somit z. B. VN3 (Handelsname der Firma Degussa) zum Einsatz kommen. Um die gewünschten Eigenschaften der Kautschukmischung bzw. des Vulkanisates zu erzielen, müssen 50 bis 80 pphr Kieselsäure eingesetzt werden. Zur Anbindung der Kieselsäure an das Polymersystem werden Silanierungsmittel wie z. B. das Bis-3-(triethoxysilylpropyl)tetrasulfid (TESPT), das auf ein Trägermaterial (Ruß) aufgebracht sein kann, verwendet Prinzipiell können auch entsprechende Verbindungen wie z. B. das Disulfid zum Einsatz kommen.

Es ist vorteilhaft, als weiteren aktiven Füllstoff Ruß in einer Konzentration bis 20 pphr einzusetzen. (Der als Trägermaterial für das Silanierungsmittel dienende Ruß wird anmeldungsgemäß nicht als Füllstoff gerechnet). Prinzipiell kann auf diesen Füllstoff zwar verzichtet werden, jedoch ergeben sich insbesondere Vorteile wenn 10 bis 20 pphr in der Kautschukmischung enthalten sind. Diese Rußmenge beeinflußt positiv das Schrumpfverhalten des unvulkanisierten Laufstreifens, so daß die Verarbeitung optimiert wird. Des weiteren wird die Leitfähigkeit im Vulkanisat erhöht, so daß die Probleme, die durch die großen elektrischen Widerstände von nur durch Kieselsäure verstärkten Mischungen verursacht werden, herabgesetzt werden können. Die Ruße sollen folgende Charakteristika aufweisen: DBP-Zahl (ASTM D 2414) 90 bis 200 cm³/100 g und einer CTAB-Zahl (ASTM D 3765) von 80 bis 170 m²/g.

Um zu der erfindungsgemäßen Kautschukmischung für Reifenlaufstreifen zu gelangen, ist es erforderlich, daß 0,1 bis 0,5 pphr Tetrabenzylthiuramdisulfid und 1 bis 3 pphr Benzothiazyl-2-cyclohexylsulfenamid in der Mischung enthalten sind. Insbesondere die Kombination aus 0,15 bis 0,25 pphr und 1,5 und 2,5 pphr CBS bewirken während der Vulkanisation optimale Eigenschaften, so daß die Verarbeitungssicherheit der Kautschukmischung gegeben ist. Die Verwendung von Tetrabenzylthiuramdisulfid bringt im Vergleich zu Diphenylguanidin auch den Vorteil mit sich, daß während der Vulkanisation keine toxischen Stoffe freigesetzt werden.

Des weiteren soll die erfindungsgemäße Kautschukmischung vorteilhafterweise 5 bis 20 pphr Weichmacher aufweisen. Diese Konzentration hat einen positiven Einfluß auf die Härte des vulkanisierten Laufstreifens, so daß die Eigenschaften bezüglich Bruchdehnung und Zugfestigkeit weiter positiv beeinflußt werden können. Als Weichmacher können herkömmliche Substanzen wie z. B. aromatische oder naphthenische Öle Verwendung finden.

Des weiteren soll die erfindungsgemäße Kautschukmischung für Laufstreifen übliche Zusatzstoffe, wie z. B. Alterungsschutzmittel und Verarbeitungshilfsmittel enthalten. Zur Vulkanisation wird Schwefel bzw. Schwefelspender eingesetzt.

Anhand der folgenden Tabelle sollen Ausführungsbeispiele näher erläutert werden.

| | Kautschukmischung [pphr] | | | |
|---|---|---|---|---|
| Bestandteil | Standard | | erfindungsgemäß | |
| | 1 | 2 | 3 | 4 |
| Naturkautschuk (NR) | 10 | 10 | 10 | 10 |
| S-SBR (Buna VSL 1940S20) | 34.4 | --- | 34.4 | --- |
| S-SBR (Buna VSL 1950S25) | 41.3 | 78.4 | 41.3 | 78.4 |
| Polybutadien (BR) | 35 | 33 | 35 | 33 |
| Ruß N 121 | 10 | 17.5 | 10 | --- |
| Ruß N 339 | --- | --- | --- | 17.5 |
| Kieselsäure (VN 3) | 70 | 70 | 70 | 70 |
| Mineralöl, aromat. | 13 | 13 | 13 | 13 |
| Aktivator X50S | --- | 12,5 | 9 | 9 |
| TESPT (Si 69) | 6,5 | --- | -- | --- |
| CaO | --- | --- | 3 | 3 |
| ASM DTPD | 1 | 0,6 | 0,6 | 0,6 |
| ASM6PPD | 1 | 1,4 | 1,4 | 1,4 |
| ZnO | 2,5 | 2 | 2,5 | 2 |
| Stearinsäure | 1 | 1 | 1 | 1 |
| Schwefel | 1,5 | 2 | 1,5 | 2 |
| CBS | 2 | 2 | 2 | 2 |
| DPG | 2 | 1,5 | -- | -- |
| TBzTD | -- | -- | 0,15 | 0,15 |
| | | | | |
| Eigenschaften | | | | |
| Fₘₐₓ-Fₘᵢₙ[dNm] | 18,77 | 21,67 | 17,02 | 23,16 |
| Fₘₐₓ[dNm] | 22,02 | 26,0 | 22,7 | 28,82 |
| Fₘᵢₙ [dNm] | 3,25 | 4,33 | 5,68 | 5,66 |
| T₅ [ₘᵢₙ] | 1,4 | 0,8 | 5 | 0,9 |
| T₉₅ [ₘᵢₙ] | 26 | 8 | 22,6 | 6,5 |
| Zugfestigkeit [Mpa] | 15 | 14.1 | 16.7 | 14 |
| Bruchdehnung [%] | 500 | 368 | 577 | 412 |
| Modul 300% | 8.63 | 12.21 | 7.8 | 10.67 |
| Härte Shore A | 64 | 70 | 62 | 70 |
| Rückprallelastizität [%] | 33 | 28 | 33 | 29 |
| Bruchenergie [J/cm³] | 30,6 | 22 | 38,57 | 24.5 |
| | | | | |

Aus der Tabelle wird ersichtlich, daß herkömmliche Kautschukmischungen für Reifenlaufstreifen (Mischungen 1 und 2) dem Vulkanisat geringere mechanische Festigkeit verleihen. Das wird aus den Werten der Zugfestigkeit, Bruchdehnung und der daraus resultierenden Bruchenergie im Vergleich mit den entsprechenden erfindungsgemäßen Mischungen 3 und 4 erkennbar. Die Lebensdauer des Vulkanisats (vulkanisierter Reifenlaufstreifen) kann somit erhöht werden. Außerdem kann der Tabelle entnommen werden, daß die Anvulkanisationszeit (T5) erfindungsgemäß erhöht werden konnte. Das bedeutet, daß die Verarbeitungssicherheit gesteigert werden kann. Gleichzeitig gibt der Wert T95 (benötigte Zeit um den Vulkanisationsgrad 95% zu erhalten) der erfindungsgemäßen Mischungen 3 und 4 im Vergleich zu den Standardmischungen 1 und 2 an, daß die Vulkanisationszeit verkürzt werden kann und somit eine Zeit- und Energieersparnis erzielt wird.

Die erfindungsgemäßen Kautschukmischungen können für die Herstellung von Reifenlaufstreifen, insbesondere für PKW-Reifen, Verwendung finden. Diese Reifen sollen einen aus dem Stand der Technik bekannten Aufbau aufweisen. Sowohl Winter- als auch Sommerreifen können mit dieser Reifenlaufstreifenmischung ausgestattet sein. Es können somit Reifen bereitgestellt werden, deren Lauffläche aus einer kieselsäureverstärkten Kautschukmischung aufgebaut ist, die einen geringen Rollwiderstand, gute Naßrutsch- bzw. Wintereigenschaften aufweisen und gleichzeitig erfindungsgemäß eine hohe Lebensdauer aufgrund erhöhter Zugfestigkeit und Bruchdehnung sowie optimaler Vulkanisationsbeeinflußung verzeichnen.

## Patentansprüche

1. Schwefelvernetzbare Reifenlaufstreifenkautschukmischung, die bezogen auf 100 Gewichtsteile der Gesamtkautschukmasse
a) 40 bis 100 pphr eines in Lösung polymerisierten Styren-Butadien-Copolymers (S-SBR),
b) 0 bis 50 pphr Naturkautschuk (NR) und/oder synthetisches Polyisopren (IR),
c) 0 bis 45 pphr Polybutadien (BR),
d) 50 bis 80 pphr Kieselsäure,
e) 0 bis 20 pphr Ruß,
f) 3 bis 7 pphr Silanierungsmittel,
g) 0,1 bis 0,5 pphr Tetrabenzylthiuramdisulfid (TBzTD) und
h) 1 bis 3 pphr Benzothiazyl-2-cyclohexylsulfenamid (CBS) sowie
i) weitere übliche Zusatzstoffe enthält.

2. Reifenlaufstreifenkautschukmischung nach Anspruch 1, **dadurch gekennzeichnet, daß** sie 0,15 bis 0,25 pphr TBzTD enthält.

3. Reifenlaufstreifenkautschukmischung nach Anspruch 1 und/oder 2, **dadurch gekennzeichnet, daß** sie 45 bis 75 pphr S-SBR enthält.

4. Reifenlaufstreifenkautschukmischung nach zumindest einem der vorhergehenden Ansprüche, **dadurch gekennzeichnet, daß** sie 10 bis 20 pphr Ruß enthält.

5. Reifenlaufstreifenkautschukmischung nach zumindest einem der vorhergehenden Ansprüche, **dadurch gekennzeichnet, daß** sie als Zusatzstoff 5 bis 20 pphr Weichmacher enthält.

6. Fahrzeugreifen, **dadurch gekennzeichnet, daß** dieser einen Laufstreifen aufweist, der aus einer Kautschukmischung nach zumindest einem der vorhergehenden Ansprüche hergestellt ist.

## Claims

1. Sulphur-cross-linkable tyre tread strip rubber mixture, which contains, relative to 100 parts by weight of the total rubber composition,
a) 40 to 100 pphr of a styrene-butadiene copolymer (S-SBR) which has been polymerised in solution,
b) 0 to 50 pphr natural rubber (NR) and/or synthetic polyisoprene (IR),
c) 0 to 45 pphr polybutadiene (BR),
d) 50 to 80 pphr silica,
e) 0 to 20 pphr carbon black,
f) 3 to 7 pphr silanating agent,
g) 0.1 to 0.5 pphr tetrabenzylthiuram disulphide (TBzTD), and
h) 1 to 3 pphr benzothiazyl-2-cyclohexyl sulphenamide (CBS), as well as
i) additional conventional additives.

2. Tyre tread strip rubber mixture according to claim 1, **characterised in that** it contains 0.15 to 0.25 pphr TBzTD.

3. Tyre tread strip rubber mixture according to claim 1 and/or 2, **characterised in that** it contains 45 to 75 pphr S-SBR.

4. Tyre tread strip rubber mixture according to at least one of the preceding claims, **characterised in that** it contains 10 to 20 pphr carbon black.

5. Tyre tread strip rubber mixture according to at least one of the preceding claims, **characterised in that** it contains 5 to 20 pphr plasticiser as the additive.

6. Vehicle tyre, **characterised in that** said tyre has a tread strip which is produced from a rubber mixture according to at least one of the preceding claims.

## Revendications

1. Mélange de caoutchouc réticulable avec du soufre, en particulier pour des bandes de roulement de pneumatiques, qui contient par rapport à 100 parties en poids de la masse de caoutchouc totale:
a) entre 40 pphr et 100 pphr d'un copolymère de styrène et de butadiène (S-SBR) polymérisé en solution,
b) entre 0 pphr et 50 pphr de caoutchouc naturel (NR) et/ou de polyisoprène synthétique (IR),
c) entre 0 pphr et 45 pphr de polybutadiène (BR),
d) entre 50 pphr et 80 pphr d'acide silique,
e) entre 0 pphr et 20 pphr de noir de carbone,
f) entre 3 pphr et 7 pphr d'un agent de silanification,
g) entre 0,1 pphr et 0,5 pphr de disulfure de tétrabenzylthiurame (TBzTD) et
h) entre 1 pphr et 3 pphr de benzothiazyl-2-cyclohexylsulfénamide (CBS),
i) ainsi que d'autres additifs habituels.

2. Mélange de caoutchouc selon la revendication 1 et/ou 2, **caractérisé en ce qu'**il contient entre 0,15 pphr et 0,25 pphr de disulfure de tétrabenzylthiurame (TBzTD).

3. Mélange de caoutchouc selon au moins l'une quelconque des revendications précédentes, **caractérisé en ce qu'**il contient entre 45 pphr et 75 pphr d'un copolymère de styrène et de butadiène polymérisé en solution (S-SBR).

4. Mélange de caoutchouc selon au moins l'une quelconque des revendications précédentes, **caractérisé en ce qu'**il contient entre 10 pphr et 20 pphr de noir de carbone.

5. Mélange de caoutchouc selon la revendication 1,
**caractérisé en ce qu'**il contient entre 5 pphr et 20 pphr de plastifiant servant d'additif.

6. Pneumatique de véhicule **caractérisé en ce que** celui-ci comprend une bande de roulement qui est fabriquée avec un mélange de caoutchouc selon au moins l'une quelconque des revendications précédentes.
